# EUROPEAN PATENT APPLICATION

(11) **EP 1 492 306 A2**
(43) Date of publication of application: **29.12.2004**
(21) Application number: 04380116.6
(22) Date of filing: 26.05.2004
(51) Int. Cl.: H04L 29/06, H04Q 7/00

(54) **System and method for anonymous access at an Internet address, and module for the system**

(30) Priority: 26.06.2003 ES 200301497
(71) Applicant: Vodafone Group PLC, Newbury Berkshire RG14 2FN (GB)
(72) Inventor: Rodriguez Reyes, José Manuel, 23400 Ubeda (Jaén) (ES)
(74) Representative: Carvajal y Urquijo, Isabel

(57) **Abstract**

The invention refers to a system and method for anonymously accessing a service offered at a determined Internet address (URL) from a mobile telephone (400), for a subscriber identified by a fixed identifier (MSISDN). The method comprises the steps of:
obtaining a temporary IP address (IP) for the subscriber;
obtaining a temporary identifier (ID) associated with the fixed identifier (MSISDN) and to the determined Internet address (URL);
establishing a connection with the determined Internet address (URL), without transmitting the fixed identifier (MSISDN) to the Internet, such that the subscriber is identified before the determined Internet address (URL) with the temporary IP address (IP) and with his or her temporary identifier (ID).

The invention also refers to a module which can form part of the system and manage the obtainment of the temporary identifier.

## Description

### FIELD OF THE INVENTION

The invention is encompassed within the field of mobile telephony. As is known, English acronyms and terms are usually used in said field in order to refer to elements and concepts which are specific to the field. The English acronyms and terms used in this text will be explained throughout.

### BACKGROUND OF THE INVENTION

In mobile telephony systems, the subscribers or customers (in this document, the terms "subscriber" and "customer" are used indistinctly) to a mobile telephony service are associated to a series of identifiers. For example, each customer in a GSM cellular mobile telephony network is associated to an identifier which is associated to his or her SIM card (Subscriber Identity Module) and is called MSISDN (Mobile Station International ISDN Number, which is basically the "telephone number", the one dialled to call the subscriber).

When a subscriber accesses a service offered by a third party (for example, an enterprise offering certain services which are accessible through the telephony network), for example, by means of a voice call or by sending a short message (SM), the third party (the enterprise offering the service) can identify the subscriber from his or her MSISDN, if the third party receives said MSISDN. However, this entails a problem from the point of view of privacy: it is desirable, both from a legal point of view and from a commercial point of view (for example, as it may occur that a subscriber does not want to be associated with the content of certain services), for the subscriber to be able to access services without having to "identify" himself or herself with his or her MSISDN or with another identifier allowing the third party to establish the "personal" identity of the subscriber.

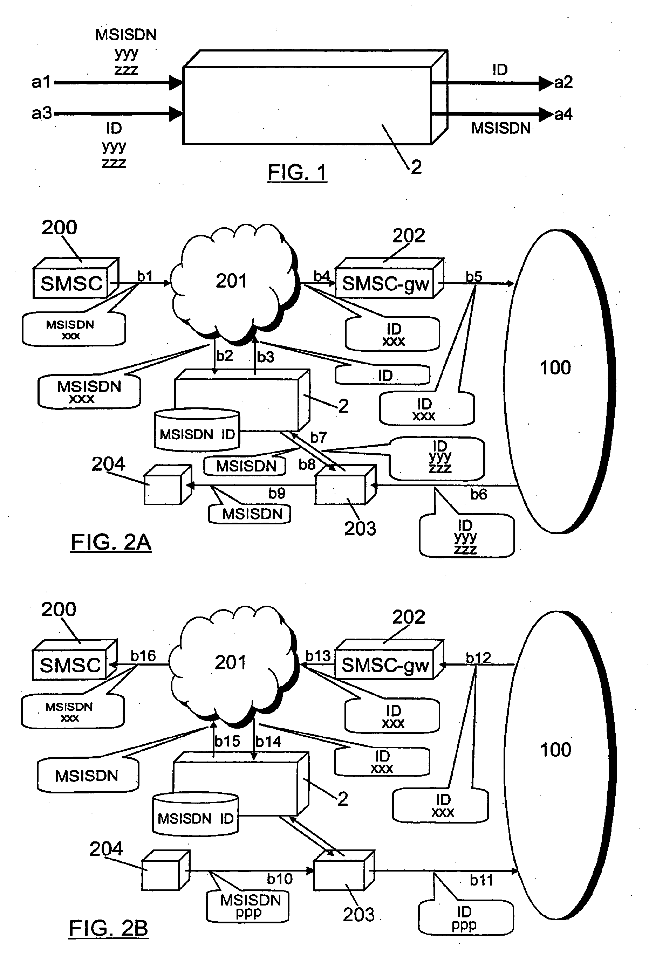

In order to solve this problem, there is what may be called an identifier server, which provides an identifier replacing the MSISDN when a subscriber wishes to access a certain service or application offered by a third party (in practice, this type of server is sometimes called a Session-Id-Server or ASID-Server). The identifier server can function in the following manner, diagrammatically illustrated in Figure 1:

The one MSISDN (the telephone number of a customer) is introduced (a1) into the identifier server (2), and the service or application is identified in some way, for instance, by means of a code, for example, by means of the "ASP-Id" + "Service-Id" pair, where "ASP-Id" (Application Service Provider Identifier) is a numerical code (for example, a code "yyy") identifying the entity providing the service, and "Service-Id" is a numerical code (for example, "zzz") identifying the application or service within the range of applications/services offered by this entity.

The server "returns" (a2) a temporary identifier (ID) corresponding to the application/service and MSISDN introduced in step (a1). The life span of this temporary identifier (ID) can be configurable according to the service (depending on the ASP-Id and on the Service-Id) and could even be customised.

When the temporary identifier (ID) is then introduced (a3) into the identifier server (and optionally the identifier of the application or service, depending on whether or not it has been decided at the design stage of the system for the temporary identifier ID to be able to be repeated among different applications, i.e., whether or not the ID identifies the application and the MSISDN in a biunivocal manner), the server returns (a4) the MSISDN.

Currently, it is clear that some short message services (SMS) can interrogate this identifier server so as to prevent passing the MSISDN of a customer on to a third party, and that they can identify the application according to the destination number (or source number if the SMS is directed to a mobile telephone from an application). For example: a customer sends a message to a recipient "xxx" to request a tune. "Xxx" is a "short number" identifying the application, and the short message manager (which "knows" that it cannot pass on the MSISDN for the application with the short number "xxx") asks the identifier server for a temporary identifier (ID) for the MSISDN which sent the message and for the application which has the short number "xxx". When the short message server obtains the temporary identifier, it changes the MSISDN for the temporary identifier ID in the suitable field of the message (specifically in that which identifies the source number) and sends it to the destination.

The reverse path is similar. A message coming from the application "xxx" is directed to a recipient identified with a numeric code. The short message manager "knows" that the application "xxx" can not send messages to mobile telephones identified with their MSISDN, and that the numeric code is therefore a temporary identifier (ID) and not the MSISDN of the recipient. For this reason, it interrogates the identifier server 2 and, from the ID, receives the returned MSISDN associated to the ID and can proceed to send the message to said MSISDN number in the conventional manner.

Figures 2A and 2B diagrammatically show the process for accessing a service offered by a third party, by means of sending a short message from a mobile telephone. To begin with, the subscriber sends a short message to an application offered by a third party 100: the subscriber selects the option to send a short message in his or her mobile telephone, writes the text and enters the number to which he or she wishes to direct it, which can be a short number "xxx" if the recipient is an application offered by a third party in order to provide a service. Using the signalling channels, the message reaches the BTS (Base Transceiver Station) by radio, then the BSC (Base Station Controller) and finally the MSC (Mobile Switching Center, a network node controlling various BSC's and which manages the control of the location of the subscribers within its area of control). From here, the MSC makes SS7 signalling queries to the VLR (Visitor Location Register) or to the HLR (Home Location Register) and sends the information to the SMSC (Short Message Service Center) 200.

In step b1 illustrated in Figure 2A, the SMSC 200 sends the message, together with the source MSISDN (the telephone number of the customer/subscriber who created the short message) and the short destination number "xxx" (an application or service can be univocally identified by its URL (Uniform Resource Locator - Internet address), by its short number or by the ASP-ID, Service-ID pair). This message is sent to the third party 100. However, before reaching the third party, a module which may be called a "third party management module" 201 detects that it is a message sent to a third party which must not know the MSISDN (for example, by comparing the short destination number "xxx" with the content of a list of "recipients" that must not receive the MSISDN; in practice, there are many known manners of implementing this process). For this reason, in step b2, the third party management module 201 requests an identifier from the identifier server 2 for that application (identified with the short number "xxx") and for that customer (identified by the MSISDN). (The third party management module usually comprises a set of platforms facilitating the connection of applications exploited by third party enterprises to the mobile telephony network. It is not something which is standardised, and therefore, each operator can implement it as it so desires. This module has the ability to take the message in SMPP format (Short Message Peer to Peer Protocol - a standard), to invoke the identifier server 2 and to replace the source-address or destination-address field, according to whether the message originates in the mobile telephone or is directed thereto, with the temporary identifier ID, and vice-versa).

In step b3, the identifier server 2 assigns a suitable temporary identifier ID and returns it to the third party management module 201, which (in step b4) sends the message to the gateway (SMSC-gateway) 202 with the third party 100, replacing the MSISDN with the temporary identifier ID returned by the identifier server 2. The third party can be any external provider which provides a service (offers a service in the form of an application, for example) through the mobile telephony network operator; for example, the third party can organise a television contest in which a determined sum can be won by sending a message to the short number "xxx". The gateway 202 maintains the connection with the third party and changes the SMPP (Short Message Peer to Peer) protocol to that agreed on with the third party (HTTP, adding a secure connection, etc.). The gateway can form part of what is called a third party management module or architecture.

In step b5, the gateway delivers the message to the third party 100. As can be seen in Figure 2A, the third party only receives the short destination number "xxx" and the temporary identifier, and therefore, it can not know the identity of the customer who originated the request for the service at hand.

Nevertheless, there are services which require data relating to the customer which the third party does not have. For example, suppose that the service requires data relating to the location of the customer. Then, as shown in step b6, the third party 100 requests the location from a location enabling server 203, identifying the application with ASP-ID yyy and with the Service-ID zzz, and the customer with the temporary identifier ID (since the MSISDN is not available to it). The location enabling server 203 is a location manager which identifies the third party applications and checks the profiles of the customers (if they allow themselves to be located or not). This module manages whether or not it can provide the location service and belongs to the network operator. The location enabling server 203 requests (b7) and obtains (b8) the MSISDN corresponding to the temporary identifier ID and to the application (yyy&zzz) from the identifier server, and if the customer and third party profiles allow the location service, it requests (b9) the location from a location module 204 (Location Server 204: this is a server embedded in the GSM network and is the one which can really locate a customer, i.e. seeing which base station (BTS) and which sector of the station he or she is logged onto, and obtaining the coordinates). In step b10 (see Figure 2B), the location module 204 returns the MSISDN and the corresponding position coordinates "ppp", and in step b11, the module 203 returns the position coordinates "ppp" to the third party, indicating however the temporary identifier ID instead of the MSISDN.

On the basis of the obtained location information, the third party prepares the information requested by the caller by means of the message to the short number (for example, a list of available restaurants close to where the customer is situated) and sends (b12) a short message with this information, identifying the recipient with a temporary identifier ID. The short message gateway 202 passes on (b13) this information to the third party management module 201, which requests (b14) and obtains (b15) (from the identifier server 2) the MSISDN and sends (b16) the information, in the form of a short message, to the short message server centre 200, indicating the MSISDN in the recipient field.

In the manner described, a customer in an operator-managed network can enjoy services rendered by third parties, without making his or her MSISDN known to the third party; the third party only knows the temporary identifier ID associated to the MSISDN and to the service at hand.

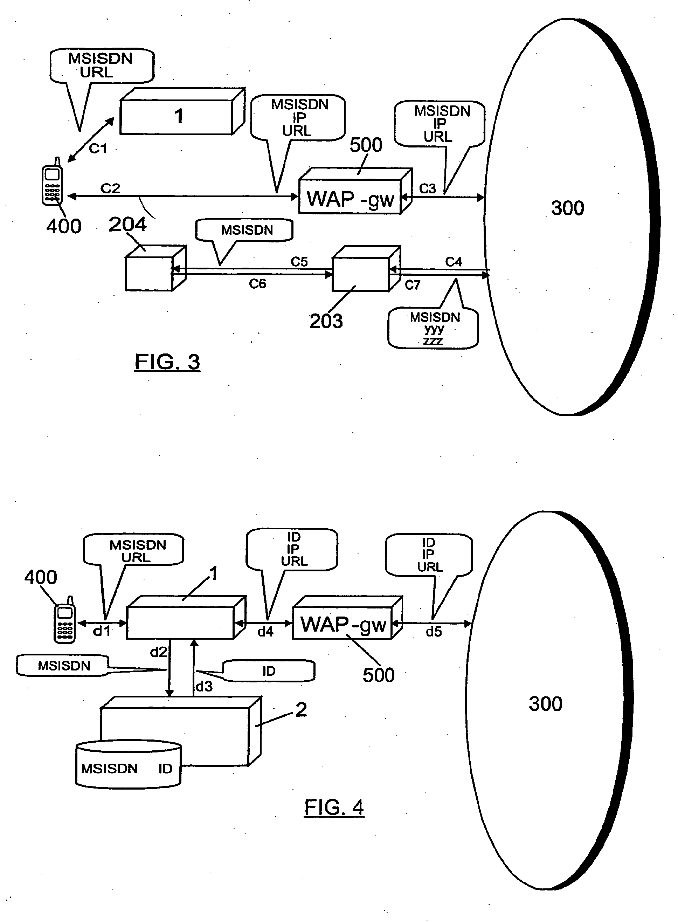

However, the system hitherto set forth refers to the access to services by means of short messages directed to a telephone number or "short number". Nevertheless, many services are today offered over the Internet and are accessible from mobile telephones on the basis of their Internet address (URL), by means of WAP (Wireless Application Protocol: an architecture or protocols which allows the subscribers to access information stored in servers instantly and from his or her mobile telephone or device). However, the identification management system described above in relation to short messages is not directly applicable to the WAP environment for the reasons set forth below, with reference to Figure 3:

Firstly, the customer attempts to begin a WAP session from his or her mobile telephone 400 (hereinafter, the subscriber, the customer and the mobile telephone will be referred to indistinctly). In order to do this, he or she establishes contact (c1) with a first node (1) configured so as to assign a temporary IP address (the acronym IP stands for Internet Protocol; this is a transmission protocol in packet switching networks; hereinafter, IP will be used to refer to the temporary IP address assigned to the mobile telephone for its navigation on the Internet). This "first node" 1 can be a node like the one named "RADIUS"; its function is to authorise Internet access to the subscriber or mobile telephone 400 and to assign a temporary IP address to the mobile telephone; the mobile telephone maintains this temporary IP address during the WAP session, during which the subscriber can connect to one or several Internet URL addresses through his or her mobile telephone. The mechanism for reaching the RADIUS depends on whether the connection is by GSM or GPRS; in the case of GPRS, the radius can be replaced with the GGSN, or the GGSN can be the one to invoke a RADIUS (the GGSN is a gateway of the GPRS environment - packets by radio - to the Internet environment; it is an element which appears in the GPRS standard and which must have the functions of the standard, although manufacturers can provide it with additional functions, for example, the assignment of an IP address). In any case, the function of the RADIUS is to allow connecting to Internet, to assign the temporary IP address and to store the MSISDN of the subscriber and the temporary assigned IP address in a database). This function can be in a RADIUS (as in the case of GSM and GPRS) or can be in the GGSN (in the case of GPRS).

Once the customer has been authorised to access the Internet and once he or she has obtained the temporary IP address by means of access (c1) to the first node 1, the subscriber accesses (c2) a node 500 configured to establish a connection between the subscriber with a temporary IP address and the Internet as a response to a request of the subscriber. This node 500 receives a request from the subscriber to connect to Internet, which includes the fixed identifier (MSISDN), the temporary IP address and the Internet address (URL) to which the subscriber wishes to connect. This node 5 is usually called a WAP gateway. The first node (RADIUS) 1 does not know which application the customer is accessing, but the node 500 (the WAP gateway) does. This node 500 can be said to be a gateway between the mobile IP world and the fixed IP world. It has traffic control functions, assistance in the application of rates, setting up customised access menus, establishing forbidden URLs (one of the features which the WAP gateway can have is the function of proxy; the majority of manufacturers have a reduced function based on restricted access services - "grey" or "black" lists of URLs-but do not allow an advanced action according to the destination URL), etc. It is a conventional element in the WAP environment.

Through the node 500, the subscriber accesses (c3) the desired Internet address (URL); this can be an Internet address corresponding to a service offered by a third party 300. For example, suppose the service requires data relating to the location of the customer. Then, as shown in step c4, the third party 300 requests the location from a location enabling module 203 (which can be the same as that mentioned in relation to figure 2A), identifying the application with ASP-ID yyy and with the Service-ID zzz, and the customer with the MSISDN. The location enabling module 203 requests (c5) the location from the location module 204 (see the comments relating to Figure 2A), which returns (c6) the MSISDN and the corresponding position coordinates to the module 203, which in turn returns them (c7) to the application of the third party 300 which requested them. Based on the location information obtained, the third party prepares the information which the subscriber has requested and sends it to the subscriber (this part is not illustrated in Figure 3, given that these are conventional steps which do not require further explanation).

As can be seen in Figure 3, the third party 301 receives the fixed identifier (the MSISDN) of the subscriber who accesses the service at hand. According to what has already been discussed, there are occasions when this is not convenient, for legal reasons, commercial reasons, etc. For this reason, it would be desirable not to pass on the fixed identifier to the third party, but to provide it a temporary identifier (ID), such that the third party can not know the "true identity" of the customer requesting the service.

At first sight, it may seem that this problem could be solved by applying a system similar to that used in relation to accessing third party services by means of short messages. By modifying the system set forth in Figure 3, the first node (RADIUS) could be configured such that when the RADIUS receives the request for a temporary IP address from the mobile telephone 400, it accesses an identifier server and obtains a temporary identifier ID. Figure 4 diagrammatically shows this possible configuration.

As in the conventional system described above, the subscriber begins by connecting (d1) to the first node 1 (the RADIUS) to obtain the temporary IP address. The first node could contact (d2) the identifier server 2 and obtain (d3) the temporary identifier (ID), so as to then carry out (d4, d5) the Internet access through the Internet connection node 500 (the WAP gateway). In this way, the third party which the subscriber addresses will not know the fixed identifier (MSISDN) of the subscriber, but only the temporary identifier (ID) and the temporary IP address of the subscriber 400.

However, this configuration has the fundamental problem of entailing the use of the same temporary identifier (ID) for all the applications: the temporary identifier (ID) can not be associated to the application which the subscriber wishes to access (identified by its URL), since the first node (RADIUS) 1 does not always know the URL to which the subscriber connects through the Internet connection node 500: the subscriber only accesses the first node when the Internet connection begins (specifically, in order to obtain the access authorisation and his or her temporary IP address); according to WAP, once the subscriber has accessed the Internet, he or she does not go through the first node (RADIUS) in order to change page but rather goes directly through the WAP gateway 500, which maintains the session with the same temporary IP address. In this way, with the temporary identifier being obtained through the first node (RADIUS) 1, the subscriber could access various services with the same temporary identifier (ID), which is not in line with the idea described above: one identifier for each subscriber and service.

In other words, the system illustrated in Figure 4 would break the relation between the temporary identifier (ID), the fixed identifier (MSISDN) and the application (i.e., the idea that there should be a specific identifier for each application/fixed identifier pair). On the other hand, it complicates the logic of the identifier server 2, since it obliges maintaining two different identifiers depending on the access mode: a generic identifier for Internet access on the basis of WAP and another "specific" identifier for the access to a determined application through short messages.

For this reason, it would be desirable to have a system allowing access to services on the Internet from a mobile telephone, having a temporary identifier (ID) associated to the specific service which one is connected to.

### DESCRIPTION OF THE INVENTION

A first aspect of the invention refers to a system for anonymously accessing a service offered at a determined Internet address (URL) (or at an address of a similar information network) from a mobile telephone. The system comprises:
a first node (for example, RADIUS) configured to assign a temporary IP address (IP) to a subscriber trying to connect to the Internet from a mobile telephone, the subscriber being identifiable by means of a fixed identifier (for example, his or her MSISDN);
a second node (for example, an identifier server) comprising means for, as a response to a request for a temporary identifier from a calling entity, which request includes the fixed identifier (MSISDN) of a subscriber and an identifier of a service (which can be the Internet address - URL - at which the service is accessed),
   - assigning a temporary identifier (ID) to the combination of the fixed identifier (MSISDN) of the subscriber and of the identifier of the service (URL) (i.e., an identifier related, for example, in a biunivocal manner, to the fixed identifier and the service; for example, the second node can be configured such that, for a determined or unlimited period of time, the same temporary identifier is always assigned to a determined fixed identifier and service combination, such that the temporary identifier can for example be used to compile invoicing data corresponding to said period and service),
   - saving the fixed identifier (MSISDN) and the associated temporary identifier (ID) in a database of temporary identifiers, such that by consulting said database, the fixed identifier (MSISDN) can be obtained from the temporary identifier (ID), and
   - returning the temporary identifier (ID) to the calling entity;
a third node (which can be constituted of a WAP gateway) configured to establish a connection between the subscriber with a temporary IP address and the Internet (or a similar information network) as a response to a request, the third node being configured such that when it receives a request for Internet connection from the subscriber including the fixed identifier (MSISDN), the temporary IP address (IP) and an Internet address (URL) to which the subscriber wishes to connect, it establishes a connection with the Internet such that the temporary IP address (IP) and the Internet address (URL) to which the subscriber wishes to connect, but not the fixed identifier (MSISDN) of the subscriber, are transmitted to the Internet;
a fourth node configured to obtain a temporary identifier (ID) corresponding to said determined Internet address (URL) and to said fixed identifier (MSISDN) from the second node, and to send said temporary identifier (ID), together with the temporary IP address (IP), to the determined Internet address (URL), as a response to a request for a temporary identifier including, at least, the fixed identifier (MSISDN) of the subscriber and a determined Internet address (URL).

The third node can be configured to invoke the fourth node when it receives a request for connection between the subscriber and the determined Internet address, for the purpose of not carrying out the Internet connection directly but through the fourth node. The fourth node can then be configured to carry out the following operations when it is invoked by the third node:
to obtain the temporary identifier (ID) by means of a request for a temporary identifier to the second node; and
to access the Internet such that the temporary identifier (ID), together with the temporary IP address and the determined Internet address (URL) are transmitted to the Internet. This fourth node can be constituted of a WAP proxy element (the proxy function allows the element to take different actions according to the destination URL of the connection).

Alternatively, the fourth node can be configured to receive the request for a temporary identifier (ID) from the Internet. The request for a temporary identifier (ID) received from the Internet can comprise, for example, the temporary IP address (IP) and the determined Internet address (URL), in which case the fourth node must comprise means for directing a request for a fixed identifier (MSISDN) to the first node (for example, the RADIUS, which can check the fixed identifier from the temporary IP address given at the time); this request must include the temporary IP address (or equivalent). The fourth node would also have means for receiving the fixed identifier requested by the first node. When the fourth node has the fixed identifier, it obtains the temporary identifier by means of consulting the second node, and returns said temporary identifier to the Internet.

A second aspect of the invention refers to a module configured to function as a fourth node in a system according to the above description.

This module can comprise:
- means for receiving a request for connection to a determined Internet address (URL) from the third node of the system, which request includes a temporary IP address (IP) of a subscriber, a fixed identifier (MSISDN) of the subscriber and the determined Internet address (URL) to which the subscriber wishes to connect;
- means for directing a request for a temporary identifier to an identifier server (corresponding to the second node of the system described above), which request includes the fixed identifier (MSISDN) and the determined Internet address (URL);
- means for receiving the temporary identifier (ID) from the identifier server; and
- means for sending said temporary identifier (ID), together with the temporary IP address, to the determined Internet address (URL).

Alternatively, the module can comprise:
- means for receiving a request for a temporary identifier from the Internet, which request includes a temporary IP address assigned to a subscriber and a determined Internet address (URL) (which is the one that would correspond to the service required by the temporary identifier);
- means for directing a request for a fixed identifier (MSISDN) to the first node of the system, which request includes the temporary IP address;
- means for receiving said fixed identifier;
- means for directing a request for a temporary identifier to an identifier server, which request includes the fixed identifier (MSISDN) and the determined Internet address (MSISDN) to which the subscriber wishes to connect;
- means for receiving the temporary identifier (ID) from the identifier server; and
- means for sending said temporary identifier (ID), together with the temporary IP address, to the determined Internet address (URL).

A third aspect of the invention refers to a method for anonymously accessing a service offered at a determined Internet address (URL) from a mobile telephone, for a subscriber identified by a fixed identifier (MSISDN). The method comprises the steps of:
obtaining a temporary IP address (IP) for the subscriber;
obtaining a temporary identifier (ID) associated to the fixed identifier (MSISDN) and to the determined Internet address (URL);
establishing a connection with the determined Internet address (URL), without transmitting the fixed identifier (MSISDN) to the Internet, such that the subscriber is identified before the determined Internet address (URL) with the temporary IP address (IP) and with his or her temporary identifier (ID).

Internet access can be carried out through a node with a WAP proxy function which establishes connection with the determined Internet address (URL) after having obtained the temporary identifier (ID) corresponding to said determined Internet address (URL) and to the fixed identifier (MSISDN) of the subscriber.

Alternatively, the Internet connection is carried out through a WAP gateway without transmitting the fixed identifier or the temporary identifier to the Internet; the temporary identifier is then obtained as a response to a query from the Internet, the query including the temporary IP address of the subscriber and the determined Internet address (URL).

### BRIEF DESCRIPTION OF THE DRAWINGS

A series of drawings will now be described, which help to better understand the invention and which are expressly related to two embodiments of said invention, shown as illustrative and non-limiting examples thereof.
Figure 1 diagrammatically shows an identifier server according to the state of the art.
Figures 2A and 2B diagrammatically show the process for accessing a service offered by a third party, by means of sending a short messages from a mobile telephone, according to the state of the art.
Figure 3 diagrammatically shows the process for accessing a service offered by a third party, by means of accessing an Internet address from a mobile telephone, according to the state of the art.
Figure 4 shows a possible modification of the system set forth in Figure 3.
Figure 5 diagrammatically shows a system according to a first embodiment of the invention.
Figure 6 diagrammatically shows a system according to a second preferred embodiment of the invention.

### DESCRIPTION OF A PREFERRED EMBODIMENT OF THE INVENTION

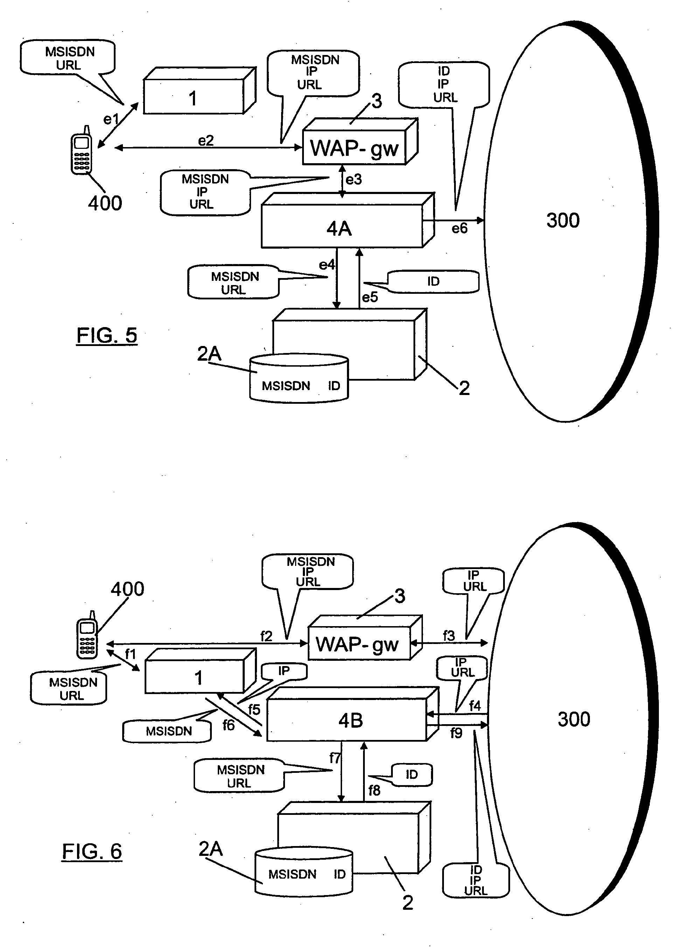

Figure 5 shows a first preferred embodiment of the invention. As can be seen in this figure, the subscriber 400 asks for an Internet connection and accesses (e1, e2) the third node 3, which is a WAP gateway, through the first node (RADIUS) 1 (which authorises the Internet access and assigns the temporary IP address (IP) to the subscriber). The subscriber wishes to access a determined Internet address (URL) corresponding to a service offered by a third party 300.

According to this embodiment of the invention, the system incorporates a new WAP proxy element 4A, which receives (e3) the fixed identifier (MSISDN) of the subscriber, the temporary IP address (IP) and the determined Internet address (URL) to which the subscriber wishes to connect. The proxy function allows the element to take different actions depending on the destination URL of the connection (forcing a call to the charging systems, denying access, requesting a special password, and in the present case, invoking the identifier server 2).

This new element, which constitutes the fourth node 4A of the invention, detects that the Internet address (URL) to which the subscriber wishes to connect is an address corresponding to a service provided by a third party 300 which must not know the fixed identifier of the subscriber, and proceeds to request (e4) a temporary identifier (ID) from the identifier server 2. The identifier server 2 returns (e5) the temporary identifier (ID) (and saves the relation between temporary identifier and fixed identifier in its database 2A), and the fourth node 4A establishes connection (e6) with the determined Internet address (URL), transmitting the temporary identifier (ID), the temporary IP address (IP) and the determined Internet address (URL), but not the fixed identifier (MSISDN). In this way, the third party has the temporary identifier but not the fixed identifier. Furthermore, this temporary identifier (ID) is only applied for accessing the determined Internet address (URL).

Figure 6 shows a second preferred embodiment of the invention. As in the first preferred embodiment, the subscriber 400 asks for an Internet connection and accesses (f1, f2) the third node 3, which is a WAP gateway, through the first node (RADIUS) 1 (which authorises the Internet access and assigns the temporary IP address (IP) to the subscriber). The subscriber wishes to access a determined Internet address (URL) corresponding to a service offered by a third party 300. The third node 3 receives the temporary IP address of the subscriber as well as the Internet address (URL) to which the subscriber wishes to connect.

Through the third node 3, the subscriber accesses (f3) the service at the desired Internet address; in this step, the third node transmits the temporary IP address (IP) of the subscriber and the determined Internet address (URL) to the Internet, but not the fixed identifier (MSISDN) of the subscriber nor any temporary identifier (ID).

In other words, the third node 3 is configured to not send the MSISDN to the third party (this is configurable in the current versions of the WAP gateways).

If the application/service requires, for example, the location of the subscriber (or shows a customised profile which needs to identify the customer in any way), the third party must ask (f4) the system for a temporary identifier ID. The third party directs the query to the fourth node 4B of the invention.

This fourth node directs a query (f5) to the first node 1, given that the latter (RADIUS) has a database relating the fixed identifier (MSISDN) of the subscriber with the temporary IP address assigned thereto, i.e., the first node can check the fixed identifier from the temporary IP address. As a response to the query, the fourth node 4B receives (f6) the fixed identifier (MSISDN) from the first node.

Next, the fourth node 4B proceeds to request (f7) a temporary identifier (ID) from the identifier server 2. The identifier server 2 returns (f8) the temporary identifier (ID) (and saves the relation between the temporary identifier and the fixed identifier in its database 2A), and the fourth node 4B establishes connection (f9) with the determined Internet address (URL), transmitting the temporary identifier (ID), the temporary IP address (IP), the determined Internet address (URL), but not the fixed identifier (MSISDN). In this way, the third party has the temporary identifier but not the fixed identifier.

From then on, the third party can show a customised menu (in the case of temporary identifiers which are continuously used for a determined application/service), invoke locating services, send the subscriber a short message using the short number associated to the application, etc. The mobile telephony network operator can have available, in the database 2A of the identifier server 2, a relation between the services or applications (identified by their URL, their short number or their "ASP-ID + Service-ID" pair), the customers (MSISDN) and the corresponding temporary identifiers (ID). If a temporary identifier for a determined application and subscriber lasts a long time or is permanent, the third party (provider of the application/service) can have a database relating each temporary identifier (ID) with a customised profile of its "client". As a result, a "customised" service can be provided, based on the temporary identifier (ID) but without knowing the "true identity" (MSISDN) of the subscriber.

For example, in a service in which a short message must be sent to the subscriber with the goals of the league day, said service can have an ASP-ID, a Service-ID, a URL and a "short number" all associated. The customer can connect to the service over the Internet (WAP access) and subscribe thereto; at this moment, the application knows his or her temporary identifier ID and each time a team scores a goal, it can send him or her a short message, indicating the temporary identifier ID as destination and the short number of the application as the source. In other words, it would be a hybrid WAP-SMS case in which the "outward path" could be similar to that shown in Figure 5 or 6 and the "return path" similar to that shown in Figure 2B (steps b12-b16). This can be done if the identifier server "knows" that the URL and the short number belong to the same application (the same ASP-ID and Service-ID pair).

The system set forth in Figure 6 ensures the anonymity of the customer (it does not pass on the fixed identifier to the third party 300), but has the weakness that if the third party has two applications (for example, A and B) and the subscriber accesses one (application A) which does not need a temporary identifier, the third party can pretend to be the other application (B), ask for the temporary identifier (ID) and, for example, "locate" the subscriber 400 without the customer realising it. The third party does not know who it is locating (it does not know the fixed identifier), but it can locate the subscriber on the basis of his or her temporary identifier.

Nevertheless, with the system set forth in Figure 5, a temporary identifier (ID) can never be sent to an application (for example, A) if the subscriber has not accessed said application, for which reason the operator has total control over the delivery of temporary identifiers to the different applications/services existing at different Internet addresses.

Throughout the present description and claims, the word "comprise" and variations thereof, such as "comprising", do not intend to exclude other steps or components.

On the other hand, the term "node" is frequently associated to a substantially independent "physical" entity or machine. However, today there are large general purpose servers which can be custom-programmed to carry out different functions. In the context of this description and claims, the expression "node" must not be interpreted as limited to an independent physical entity, but rather to a set of functions; said functions can be shared among several different physical devices or machines; it is also possible to implement several of the "nodes" which are being referred to in one same physical machine.

## Claims

1. A system for anonymously accessing a service offered at a determined Internet address (URL) from a mobile telephone (400), **characterised in that** it comprises:
a first node (1) (RADIUS) configured to assign a temporary IP address (IP) to a subscriber attempting to connect to the Internet from a mobile telephone, the subscriber being identifiable by means of a fixed identifier (MSISDN);
a second node (2) comprising means for, as a response to a request (e4, f7) for a temporary identifier from a calling entity, which request includes the fixed identifier (MSISDN) of a subscriber and an identifier of a service (URL),
- assigning a temporary identifier (ID) to the combination of the fixed identifier (MSISDN) of the subscriber and the identifier of the service (URL),
- saving the fixed identifier (MSISDN) and the associated temporary identifier (ID) in a database (2A), such that by consulting said database, the fixed identifier (MSISDN) can be obtained from the temporary identifier (ID), and
- returning (e5, f8) the temporary identifier (ID) to the calling entity;
a third node (3) (WAP gateway) configured to establish a connection (e3, e6; f3) between the subscriber with a temporary IP address and the Internet as a response to a request, the third node being configured such that when it receives a request for Internet connection from the subscriber including the fixed identifier (MSISDN), the temporary IP address (IP) and an Internet address (URL) to which the subscriber wishes to connect, it establishes an Internet connection such that the temporary IP address (IP) and the Internet address (URL) to which the subscriber wishes to connect, but not the fixed identifier (MSISDN) of the subscriber, are transmitted to the Internet;
a fourth node (4A, 4B) configured to obtain (e4, e5; f7, f8) a temporary identifier (ID) corresponding to said determined Internet address (URL) and to said fixed identifier (MSISDN) from the second node (2), and to send said temporary identifier (ID), together with the temporary IP address (IP), to the determined Internet address (URL), as a response to a request for a temporary identifier including, at least, the fixed identifier (MSISDN) of the subscriber and a determined Internet address (URL).

2. A system according to claim 1, **characterised in that** the third node is configured to invoke the fourth node (4A) when it receives a request for connection between the subscriber and the determined Internet address, for the purpose of not carrying out the Internet connection directly but rather through the fourth node (4A).

3. A system according to claim 2, **characterised in that** the fourth node (4A) is configured to carry out the following operations when it is invoked by the third node:
obtaining the temporary identifier (ID) by means of a request for the temporary identifier to the second node; and
accessing the Internet such that the temporary identifier (ID), together with the temporary IP address and the determined Internet address (URL) are transmitted to the Internet.

4. A system according to any of claims 2 and 3, **characterised in that** the fourth node (4A) is constituted of a WAP proxy element.

5. A system according to claim 1, **characterised in that** the fourth node (4B) is configured to receive (f4) the request for a temporary identifier (ID) from the Internet.

6. A system according to claim 5, **characterised in that** the request for a temporary identifier (ID) received from the Internet comprises the temporary IP address (IP) and the determined Internet address (URL), and **in that** the fourth node comprises means for directing a request (f5) for a fixed identifier (MSISDN) to the first node (1), which request includes the temporary IP address, and means for receiving (f6) said fixed identifier from the first node (1 ).

7. A system according to any of the previous claims, **characterised in that** the fixed identifier is the MSISDN of the subscriber.

8. A module configured to function as a fourth node (4A) in a system according to any of claims 1 to 4, **characterised in that** it comprises:
- means for receiving a request for connection to a determined Internet address (URL) from the third node (3) of the system, which request includes a temporary IP address (IP) of a subscriber, a fixed identifier (MSISDN) of the subscriber and the determined Internet address (URL) to which the subscriber wishes to connect;
- means for directing a request (e4) for a temporary identifier to an identifier server (2), which request includes the fixed identifier (MSISDN) and the determined Internet address (URL);
- means for receiving (e5) the temporary identifier (ID) from the identifier server (2); and
- means for sending (e6) said temporary identifier (ID), together with the temporary IP address, to the determined Internet address (URL).

9. A module configured to function as a fourth node (4B) in a system according to any of claims 5 and 6, **characterised in that** it comprises:
- means for receiving a request (f4) for a temporary identifier from the Internet, which request includes a temporary IP address assigned to a subscriber and a determined Internet address (URL);
- means for directing a request (f5) for a fixed identifier (MSISDN) to a first node of the system, which request includes the temporary IP address;
- means for receiving (f6) said fixed identifier;
- means for directing a request (f7) for a temporary identifier to an identifier server (2), which request includes the fixed identifier (MSISDN) and the determined Internet address (URL) to which the subscriber wishes to connect;
- means for receiving (f8) the temporary identifier (ID) from the identifier server (2); and
- means for sending (f9) said temporary identifier (ID), together with the temporary IP address, to the determined Internet address (URL).

10. A method for anonymously accessing a service offered at a determined Internet address (URL) from a mobile telephone (400), for a subscriber identified by a fixed identifier (MSISDN), **characterised in that** it comprises the steps of:
obtaining a temporary IP address (IP) for the subscriber;
obtaining a temporary identifier (ID) associated to the fixed identifier (MSISDN) and to the determined Internet address (URL);
establishing a connection with the determined Internet address (URL), without transmitting the fixed identifier (MSISDN) to the Internet, such that the subscriber is identified before the determined Internet address (URL) with the temporary IP address (IP) and with his or her temporary identifier (ID).

11. A method according to claim 10, **characterised in that** the Internet access is carried out through a node (4A) with a WAP proxy function, which establishes connection (e6) with the determined Internet address (URL) after having obtained the temporary identifier (ID) corresponding to said determined Internet address (URL) and to the fixed identifier (MSISDN) of the subscriber.

12. A method according to claim 10, **characterised in that** the Internet connection is carried out through a WAP gateway (3) without transmitting the fixed identifier or the temporary identifier to the Internet, and **in that** the temporary identifier (ID) is obtained as a response to a query (f4) from the Internet, the query including the temporary IP address of the subscriber and the determined Internet address (URL).
